# EUROPEAN PATENT SPECIFICATION

(11) **EP 0 532 825 B1**
(45) Date of publication and mention of the grant of the patent: **13.09.1995**
(21) Application number: 92104217.2
(22) Date of filing: 11.03.1992
(51) Int. Cl.: C03B 5/235

(54) **Auxiliary oxygen burners technique in glass melting cross-fired regenerative furnaces**
Verfahren zum Schmelzen von Glas in einem mit Querbrenner sowie mit Sauerstoff befeuerten Zusatzbrenner bestücktem Regerativofen
Procédé de fusion du verre dans un four du type à régénération et à brûleurs transversaux équipé de brûleurs auxiliaires à oxygène

(30) Priority: 18.09.1991 US 761448
(43) Date of publication of application: 24.03.1993
(73) Proprietor: PRAXAIR TECHNOLOGY, INC., Danbury, CT 06810-5113 (US)
(72) Inventor: Castelain, Robert Jules, B-7160 Godarville (BE); Wouters, Luc Andre, B-2970 Schilde (BE)
(74) Representative: Schwan, Gerhard, Dipl.-Ing.

(56) References cited:
- EP-A- 0 127 513
- WO-A-82/04246
- WO-A-90/12760
- GB-A- 2 140 910
- US-A- 3 592 622
- US-A- 3 592 623
- US-A- 4 874 311
- US-A- 4 909 733
- GLASS INDUSTRY vol. 67, no. 4, March 1986, NEW YORK US pages 14 - 18 L.K.KLINGENSMITH 'Direct-Fired Melter Performance Improved by Gas/Oxygen Firing'
- GLASS INDUSTRY vol. 73, no. 4, 10 March 1992, NEW YORK US pages 12 - 26 G.TUSON ET AL. 'How 100% Oxygen Firing Impacts Regenerative Melters'

## Description

### Technical Field

The invention relates to the employment of at least one oxygen-fuel burner in a particular manner in cross-fired regenerative furnaces to improve the efficiency of the glass melting, thereby increasing the glass production rate.

### Background of the Invention

Cross-fired regenerative furnaces have been commonly employed to manufacture glass. A typical cross-fired regenerative furnace has a melting chamber in which glass forming ingredients such as silica, boric oxide and other additives including stabilizers and fluxes, are heated by air-fuel burners which are placed along the lateral sides of the melting chamber. By combusting fuel in the presence of preheated air from a regenerator, the air-fuel burners provide heat to the atmosphere and walls of the melting chamber, which, in turn, heat the glass forming ingredients in the melting chamber by convection and radiation. Although the thermal efficiency of this heating process is relatively high, the glass production rate may decrease with time because of decreasing regenerator performance and increasing wall losses. The performance of the regenerator, for example, may be deteriorated when the regenerator is partially plugged or partially destroyed due to the presence of chemical contaminants in the resulting combustion gases which pass through the regenerator.

An oxygen enrichment technique has been proposed for increasing the melting capacity of a cross-fired regenerative furnace. The technique involves introducing oxygen in an area of the furnace where a fuel is being combusted in the presence of air. This technique, however, has a number of disadvantages. First, the addition of oxygen has no concentrated effect on a specific area, such as the batchline or in the vicinity thereof, where a high temperature condition is needed to melt floating solid glass batch. The consumption of oxygen is, therefore, high for a low glass production increase. Second, the air flames, which are at a high temperature due to the presence of oxygen, radiate more heat to the roof of the melting chamber. When the roof is subject to such a condition for a long period, its useful life could be reduced.

The use of oxygen-fuel auxiliary burners in a number of glass making furnaces has also been proposed. For instance, oxygen-fuel auxiliary burners have been employed on the sides of a rectangular melting chamber of a conventional U-shape flame regenerator furnace to assist the melting process. However, oxygen-fuel auxiliary burners have not been employed successfully in a cross-fired regenerative furnace. The major factor which is hindering their use in a cross-fired regenerative furnace is the difficult and restricted access to the furnace melting space. This access normally consists of a small (1 m wide) corridor between the regenerators and the melting furnace, not allowing the conventional installation of oxygen-fuel auxiliary burners. The use of at least one oxygen-fuel burner also may not be economical since it may cause a less efficient fuel usage of the air burners and may reduce the life of a furnace by overheating. Moreover, drilling holes into the refractory lining of the furnace to install at least one oxygen-fuel burner may adversely affect the life of the furnace and the life of the installed oxygen-fuel auxiliary burner.

A glass melting process of the type defined in the pre-characterizing part of claim 1 is known from WO-A-90 12 760. In this process two oxygen-fuel burners are used on each side wall of the furnace. One of these two burners is mounted at the infeed end of the furnace and is directed obliquely forwards and inwards in relation to the feed direction of the batch material; this burner is firing a high velocity flame directed onto the still solid batch material. Impinging high velocity flames on the solid batch material involves the problem of batch material starting to fly everywhere in the furnace with the consequence of a serious corrosion on the refractory walls of the melting chamber. Moreover, firing flames by the oxygen-fuel burners at an angle with respect to the flames from the air-fuel burners tends to disrupt the flame momentum emitted from the air-fuel burners. The two further oxygen-fuel burners are placed, on the two side walls of the furnace, parallel to the air-fuel burners to fire flames on the surface of the molten glass bed at the hottest zone of the bed. Upon impingement of the flames from these oxygen-fuel burners on the hottest zone of the molten bed, the very hot radiating surface tends to radiate too much heat to the roof what can eventually destroy the refractory. Therefore, the oxygen-fuel burners are used in the prior process to provide a limited degree of additional heating only.

A furnace of the type defined in the pre-characterizing part of claim 4 and a retrofitting process of the type defined in the pre-characterizing part of claim 6 are known from Glass Industry, Vol. 67, No. 4, 1986, pages 14 to 18. The prior furnace is a direct-fired furnace, and the oxygen-fuel burner used therein comprises a refractory block having a more or less converging-diverging passageway attached to a burner steel frame. The refractory block is part of the oxygen-fuel burner, with its passageway providing a combustion chamber for the burner. This oxygen-fuel burner would likely produce a wide spread flame similar to those produced by an air-fuel burner in a cross-fired regenerative furnace since this oxygen-fuel burner, like the air-fuel burner, combusts fuel within a converging and diverging passageway of the refractory block. In the direct-fired furnace having no regenerators, such a burner causes no temperature problem and can be installed easily along the available sidewall. However, in a cross-fired regenerative furnace, this type of an oxygen burner will likely overheat the roof of the melting chamber since a wide spread flame similar to that produced by an air-fuel burner would radiate too much heat to the roof of the cross-fired regenerative furnace. A similar direct-fired glass melting furnace is known from US-A-4 909 733. In this furnace each air-fuel burner has associated thereto an oxygen lance which is placed below the respective burner and which emits a flat jet of oxygen or oxygen-enriched air at a rate and in sufficient proximity to the air-fuel flame to create an aerodynamically reduced pressure field which deforms and displaces the flame toward the surface of the glass material.

In a regenerative glass melting furnace known from US-A-3 592 623 a pair of alternatively operated air-fuel burners are placed on the back wall of the furnace over each a port communicating with each a regenerator. The air-fuel burners project a bushy flame substantially horizontally into the melting chamber defined by the furnace. The furnace further is provided with a pair of oxy-fuel burners placed on each side wall of the furnace and directed so that the products of combustion which emanate from the high velocity oxy-fuel flames are directed so as to contact the unmolten raw material and force it toward the back wall.

It is an object of the present invention to install oxygen-fuel auxiliary burners in a cross-fired regenerative furnace in such a manner to accomodate the restraints imposed by the regenerators.

It is another object of the invention to provide for a process and a furnace which permit installing oxygen-fuel auxiliary burners in a cross-fired regenerative furnace without drilling any holes in the refractory lining of the furnace.

It is yet another object of the invention to provide for a process and a furnace which allow to maintain a particular glass production rate even when the regenerators of the furnace are partially plugged or destroyed, or are being repaired.

It is an additional object of the invention to provide for a process and a furnace which allow to increase the glass production rate without consuming excessive amounts of oxygen and fuel and without overheating the roof of the furnace.

It is a further object of the invention to provide for a process and a furnace which allow use of non-water-cooled oxygen-fuel auxiliary burners.

### Summary of the Invention

In conformity with one aspect of the subject invention a process for melting the raw glass forming ingredients in a cross-fired regenerative furnace having at least two regenerators which communicate with a melting chamber having a bottom, a roof, lateral side walls, inlet means and outlet means through a plurality of ports along the lateral side walls of the melting chamber, comprising heating the raw glass forming ingredients and the resulting melt in said melting chamber by firing flames alternately from at least one air-fuel burner and at least one oxygen-fuel auxiliary burner on each lateral side wall, said at least one oxygen-fuel auxiliary burner being placed parallel to said at least one air-fuel burner, is characterized by firing the flame of said at least one oxygen-fuel auxiliary burner at the interface of the unmelted glass forming ingredients and the molten glass using the same firing sequence as said at least one air-fuel burner so that said flame from said at least one oxygen-fuel auxiliary burner is directed to the interface of the unmelted glass forming ingredients and the molten glass, without disrupting the flame momentum emitted from said at least one air-fuel burner.

According to a further aspect of the subject invention a furnace useful for melting glass forming ingredients, said furnace comprising a melting chamber having a bottom, a roof, lateral side walls, inlet means and outlet means; at least one air-fuel burner comprising at least one first refractory block placed on each lateral side wall; at least one second refractory block capable of being fitted with at least one oxygen-fuel auxiliary burner placed parallel to said at least one first refractory block, and at least one oxygen-fuel auxiliary burner comprising a tube for passing fuel, which is coaxially placed within a cylindrical pipe for passing oxygen, inserted within a passageway of said second refractory block, is characterized in that said furnace is a cross-fired regenerative furnace comprising at least two regenerators which communicate with said melting chamber through a plurality of ports along the length of the lateral side walls of the melting chamber; that said first refractory block has a converging and diverging passageway and a fuel lance inserted therein and is placed adjacent to or under said plurality of ports; and that said second refractory block has at least one cylindrical passageway for receiving said oxygen-fuel auxiliary burner.

In conformity with a further aspect of the subject invention a process for retrofitting a furnace useful for melting glass forming ingredients, said furnace comprising a melting chamber having a bottom, a roof, laterial side walls, inlet means and outlet means; and at least one air-fuel burner placed on each lateral side wall, said at least one air-fuel burner comprising a first refractory block having a passageway; wherein said furnace at least partly is converted from air-fuel burner firing to oxy-fuel firing using at least one oxygen-fuel auxiliary burner with an associated second refractory block, is characterized in that for retrofitting a cross-fired regenerative furnace in which at least two regenerators communicate with said melting chamber through a plurality of ports and in which said at least one air-fuel burner is placed adjacent to or under said plurality of ports and has a fuel lance placed in the passageway of said first refractory block, said fuel lance and said first refractory block are removed from said lateral side walls of said melting chamber, a second refractory block having a passageway which is suitable for insertion of at least one oxygen-fuel auxiliary burner is placed therefor, and at least one oxygen-fuel auxiliary burner is inserted within said passageway of said second refractory block.

When at least one oxygen-fuel auxiliary burner placed under or adjacent to the ports along the lateral side walls of the melting chamber fires its flame toward the same direction as the air-fuel burners, substantially parallel to the air flames, following the firing sequence of the air-fuel burners, the flame momentum of the air-fuel burners is not disrupted.

The oxygen-fuel auxiliary burner preferably is recessed within at least one passageway of the second refractory block, and it provides its flame in a localized manner to heat a specific area without touching the walls and is operated to avoid disruption of the flame momentum of the air-fuel burners. The oxygen-fuel burner or oxygen-fuel burners installed in this manner are useful in increasing the glass production rate without overheating the furnace and are useful in providing flexibility to a glass manufacturing process by being able to operate the furnace even when its regenerators are not functioning properly.

At least one oxygen-fuel auxiliary burner generally comprises a tube coaxially placed within a cylindrical pipe. The first ends of said tube and pipe terminate in a nozzle tip while the second ends of said tube and pipe are connected to and are in communication with a fuel providing means and an oxygen providing means, respectively. The oxygen-fuel auxiliary burner may be bent or angled to direct its flame toward a specific area in the melting chamber, particularly the batch line.

The second (or modified) refractory block and oxygen-fuel auxiliary burner are preferably placed under the port or in the vicinity of a port which is close to the batch line. The number of second or modified refractory blocks employed corresponds to the number of oxygen-fuel auxiliary burners employed. The number of oxygen-fuel burners employed may be such that the furnace could be operated entirely with oxygen-fuel burners.

As used herein, the term "the batchline" means the interface of the solid, unmelted gloss forming ingredients and the molten glass in the melting chamber.

As used herein, the term "flame momentum" means the direction, movement or pattern of a flame flow.

### Brief Description of the Drawings

Figure 1 is a lateral cross-sectional view of one embodiment of the cross-fired regenerative furnace of the present invention.

Figure 2 is a plan view of one embodiment of a cross-fired regenerative furnace of the present invention showing right side ports during their firing cycle and left side ports during their exhaust or off-firing cycle.

Figure 3 is a cross-sectional view of a conventional refractory block for the air-fuel lance.

Figure 4 is a cross-sectional view of a modified refractory block for the oxygen-fuel auxiliary burner useful in the practice of this invention.

Figure 5 is a cross-sectional view of one embodiment of a modified refractory block with the oxygen-fuel burner inserted therein.

### Detailed Description of the Invention

The intention relates to the use of oxygen-fuel auxiliary burners with a cross-fired regenerative glass making furnace to provide heat more efficiently to melt batch raw glass forming ingredients. The invention further comprises employing at least one modified refractory block which can enhance the operation of auxiliary oxygen-fuel burners.

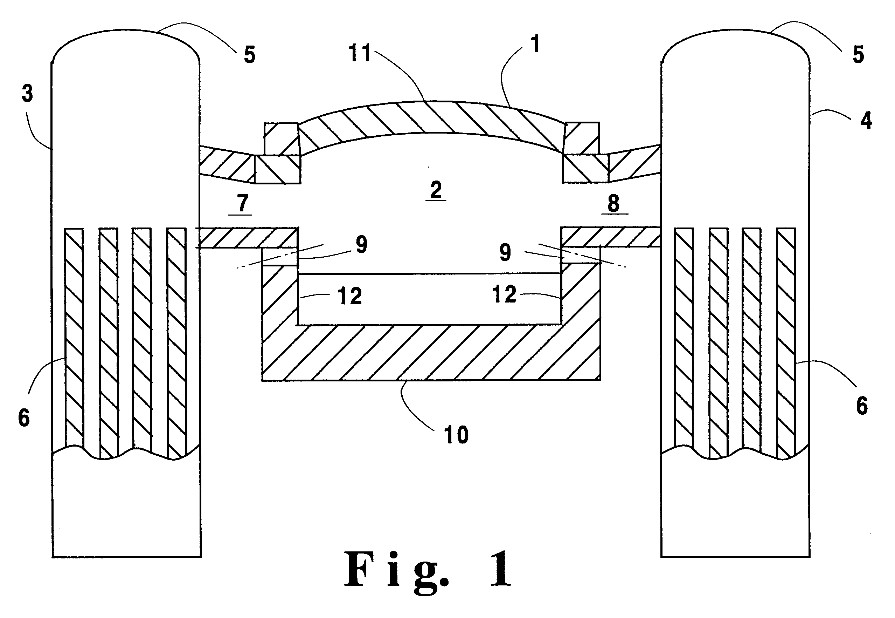

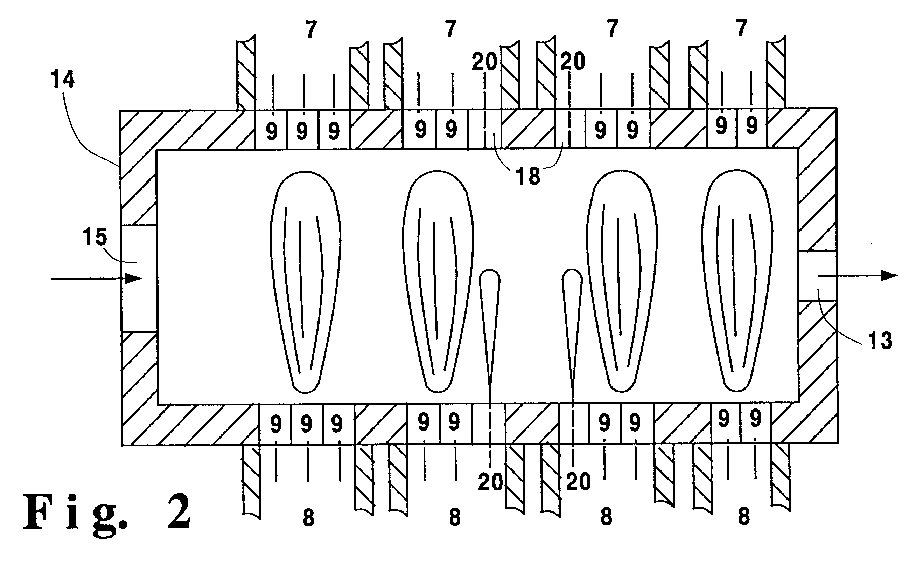

Referring to Figures 1 and 2, a cross-fired regenerative furnace (1) having a melting chamber (2) flanked by a pair of regenerators (3 and 4) is illustrated in cross-sectional and plan views. Each regenerator (3 and 4) includes a refractory housing (5) containing refractory materials (6) stacked in a checkerboard fashion that permits the alternate passage of air and exhaust gas. Each regenerator (3 and 4) communicates with the melting chamber (2) via a plurality of air ports (7 and 8). Under the ports or in the side-walls adjacent to the ports, at least one first air-fuel refractory block (9) and at least one second refractory block (18) are located. While at least one fuel lance is placed within at least one first air-fuel refractory block (9), at least one auxiliary oxygen-fuel burner (20) is recessed within at least one passageway of at least one second refractory block (18).

The melting chamber (2), which is in communication with said plurality of ports (7 and 8) and refractory blocks (9 and 18), has a refractory bottom (10), a refractory roof (11), refractory side-walls (12), refractory exit area (13) and a refractory back-wall (14). Glass forming ingredients are fed to this melting chamber (2) from an inlet means (15). The glass forming ingredients are melted with burners located within the ports and then exit through the exit area (13).

The glass forming ingredients are a mixture of high temperature melting raw materials used in the manufacture of glass. The mixture make-up is dependent on the type of glass being produced. Normally, the mixture comprises, inter alia, silica containing materials including scrap glass referred to as cullet. Other glass making raw materials including feldspar, limestone, dolomite, soda ash, potash, borax and alumina may be used. To alter the properties of the glass, a minor amount of arsenic, antimony, sulfates and/or fluorides needs to be added. Moreover, color forming mental oxides can be added to obtain the desired color.

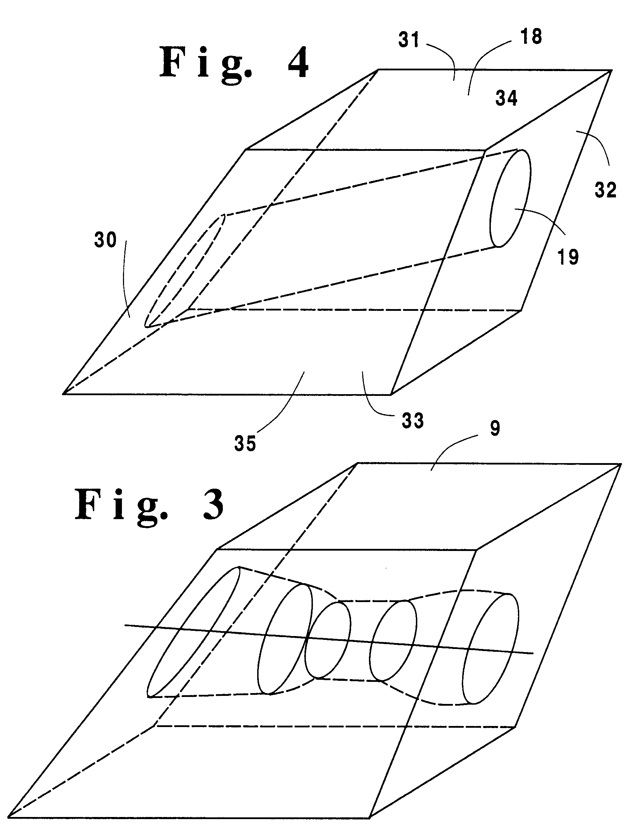

The interior of the melting chamber (2) is heated in part by the combustion of fuel in the presence of preheated air. Various fuels, including gaseous fuels, liquid fuel and powdered fuels may be introduced via at least one fuel lance which is placed in a converging-diverging shape passageway of at least one first refractory block (9) as shown in Figure 3. During an initial combustion cycle, air passes from the left regenerator (3) through a plurality of ports (7) and enters into the melting chamber (2) while the combustion products (gases) are removed through a plurality of ports (8) into the right regenerator (4) where heat is recovered from the combustion products via the refractory checker (6) located in the regenerator (4). In the next combustion cycle, the operation is reversed, with air passing from the right regenerator (4) through a plurality of the ports (8) into the melting chamber (2) and with the combustion product exhausting through a plurality of ports (7) into the left regenerator (3) where heat is recovered by means of the refractory checkers (6) located in the regenerator (3). The air is preheated as it passes through heated refractory checkers (6). The flow of air (the direction of combustion) is periodically reversed, for example, each 30 minutes, in the above manner by using, for example, valves (not shown).

The interior of the melting chamber (2) is also heated in part by at least one oxygen-fuel auxiliary burner (20). The oxygen/fuel auxiliary burners (20) located under or adjacent to a plurality of ports (7 and 8) fire alternately, parallel to the air-flames, following the firing sequence of the air-fuel burners located under or adjacent to the ports (7 and 8). When, for example, the air-fuel burners on the left side fires, at least one oxygen/fuel burner (20) on the same side fires. Meanwhile, all burners (air plus oxygen) located on the right port side are shut down. This firing technique, in addition to a specific placement, enables the oxygen-fuel flame to efficiently provide heat without disrupting the momentum of the air-fuel flames, thereby minimizing the amount of fuel employed.

The oxygen-fuel auxiliary burner (20) may also be used as the sole source for heating the interior of the melting chamber. When the air-fuel burners are no longer effective or operational, a sufficient number of oxygen-fuel burners should be employed so that the glass melting rate of a cross-fired regenerative furnace can be maintained. By installing the oxygen-fuel burners in lieu of the existing fuel lance, a sufficient number of the oxygen-fuel auxiliary burners can be employed. The oxygen-fuel auxiliary burners can also be used similarly as the air-fuel burners since the oxygen-fuel burners are similarly located as the previously operated air-fuel burners. The furnace, therefore, need not be shut down when the regenerators are being repaired to restore the air-fuel burners to their original, operable state.

The temperature of the flame imparted by the oxygen-fuel auxiliary burner is usually dependent on the quality of the fuel and the oxygen-fuel ratio. The oxygen employed may be in the form of oxygen-enriched air having an oxygen concentration of more than 21 percent or preferably at least 50 percent or may be technically pure oxygen having an oxygen concentration of 99.5 percent or more. The temperature of the flame of a auxiliary oxygen-fuel burner is generally at about 2780°C. In some cases, oxygen-burners with lower flame temperatures could also be used.

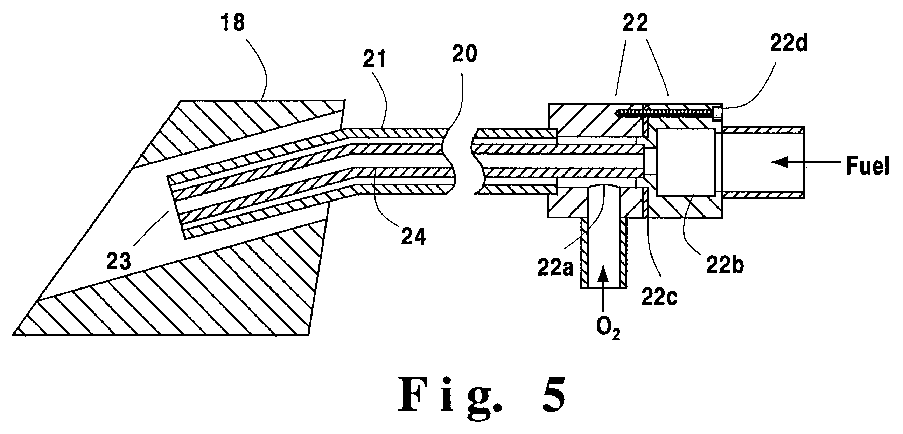

As shown in Fig. 5 the oxy-fuel auxiliary burner (20) includes a cylindrical pipe (21) coupled to an oxygen source (not shown) via a coupling means (22). The cylindrical pipe (21) terminates in a nozzle tip (23) from which the oxygen is emitted. A tube (24) is coaxially positioned within the pipe (21). A fuel source (not shown) is coupled to the tube (24) via a coupling means (22) so that the fuel fed to the tube (24) can be emitted from the nozzle tip (23). The coupling means (22) comprises two separate chambers (22-a) and (22-b), which are connected by binding means including a gasket (22-c) and screws (22-d). The chamber (22-a), which is in communication with the pipe (21), is aligned with the chamber (22-b) to form a coupling means (22) having a cylindrical shape. A water jacket (not shown) can be provided to cool or reduce the temperature of the oxygen-fuel auxiliary burner. Both the cylindrical pipe (21) and the tube (24) of the burner could be bent or angled or straight to fit into a modified refractory block (18) having an inclined or straight passageway.

The second refractory block (18) in Figures 2, 4 and 5 may be substantially in the form of a rectangular-like shape or parallel-piped-like shape. Its size and shape, however, generally correspond to the external size and shape of a conventional refractory block for air-fuel burners (such as the one in Figure 3) so that it can take the place of a conventional refractory block. The second refractory block usually comprises sides (33 and 34), a face (30), a back (32), a top (31) and a bottom (35). On the bottom portion of the face (30), a passageway (19) is present. The passageway (19) extends from the face (30) to the opposite surface, the back (32), in an obliquely rising manner. The design of the passageway (19) is such that an oxygen-fuel auxiliary burner can be accommodated to direct its flame toward a specific area, such as the batchline. The shape, size and angle of inclination of the passageway are such that the flame of the oxygen-fuel burner is localized to provide heat to a specific area where a high temperature condition is needed without touching the refractory wall, thereby minimizing the amount of oxygen and fuel needed in a glass melting process and minimizing refractory wall losses. The passageway may be cylindrically designed.

The following example serves to illustrate the invention. It is presented for illustrative purposes and is not intended to be limiting.

### Example

A cross-fired regenerative furnace with a capacity of over 154 t/d (170 short tons per day), having only air-fuel burners, was employed in manufacturing bottle glass. Because of decreasing regenerator performance, the glass production rate subsequently decreases. Using 3% O₂-enrichment, 360 m³/O₂/hr (at normal pressure and temperature), a maximum production increase of 18 t/d (20 short tons per day) was achieved. However, with the further deterioration of the regenerator, the necessary production rate could not be maintained. To this cross-fired regenerative furnace, oxygen-fuel burners were provided to heat without disrupting the momentum of the air flames. In order to accomplish the task, burners and burner blocks, such as are illustrated in Figures 4 and 5, were installed in the furnace.

Two conventional oil burner blocks (one on each side of the furnace) were replaced with two new modified blocks as shown in Figures 4 and 5. The oxygen-fuel burners, each with a capacity of about 100 m³ natural gas/hr (at normal pressure and temperature), were then placed into the passages in the modified blocks, which communicate with the melting chamber. The burners were intensively used and inspected several times. After one month, two additional oxygen-fuel burners (one on each side of the furnace), shown in Figure 5, were installed so that the total firing could reach about 200 m³ natural gas/hr (at normal pressure and temperature). An increased production rate of 18 t/d (20 short tons per day) was achieved with a gas flow of about 140 m³/hr (at normal pressure and temperature) and 260 m³ O₂/hr (at normal pressure and temperature), using commercially produced oxygen.

## Claims

1. A process for melting raw glass forming ingredients in a cross-fired regenerative furnace (1) having at least two regenerators (3, 4) which communicate with a melting chamber (2) having a bottom (10), a roof (11), lateral side walls (12), inlet means (15) and outlet means (13) through a plurality of ports (7, 8) along the lateral side walls of the melting chamber, comprising heating the raw glass forming ingredients and the resulting melt in said melting chamber (2) by firing flames alternately from at least one air-fuel burner and at least one oxygen-fuel auxiliary burner (20) on each lateral side wall (12), said at least one oxygen-fuel auxiliary burner (20) being placed parallel to said at least one air-fuel burner, **characterized by** firing the flame of said at least one oxygen-fuel auxiliary burner (20) at the interface of the unmelted glass forming ingredients and the molten glass using the same firing sequence as said at least one air-fuel burner so that said flame from said at least one oxygen-fuel auxiliary burner (20) is directed to the interface of the unmelted glass forming ingredients and the molten glass, without disrupting the flame momentum emitted from said at least one air-fuel burner.

2. The process according to claim 1, further comprising providing a refractory block (18) having at least one cylindrical passageway (19) therethrough adjacent or under said plurality of ports (7, 8) for placing said at least one oxygen-fuel auxiliary burner (20) within said at least one cylindrical passageway (19) in a recessed manner.

3. The process according to claim 1 or 2, wherein two oxygen-fuel auxiliary burners (20) are provided on each lateral side wall (12).

4. A furnace useful for melting glass forming ingredients, said furnace (1) comprising a melting chamber (2) having a bottom (10), a roof (11), lateral side walls (12), inlet means (15) and outlet means (13); at least one air-fuel burner comprising at least one first refractory block (9) placed on each lateral side wall; at least one second refractory block (18) capable of being fitted with at least one oxygen-fuel auxiliary burner (20) placed parallel to said at least one first refractory block (9), and at least one oxygen-fuel auxiliary burner (20) comprising a tube (24) for passing fuel, which is coaxially placed within a cylindrical pipe (21) for passing oxygen, inserted within a passageway (19) of said second refractory block (18); **characterized in** that said furnace is a cross-fired regenerative furnace comprising at least two regenerators (3, 4) which communicate with said melting chamber (2) through a plurality of ports (7,8) along the length of the lateral side walls (12) of the melting chamber; that said first refractory block (9) has a converging and diverging passageway and a fuel lance inserted therein and is placed adjacent to or under said plurality of ports (7, 8); and that said second refractory block (18) has at least one cylindrical passageway (19) for receiving said oxygen-fuel auxiliary burner (20).

5. The furnace according to claim 4, wherein said at least one second refractory block (18) has a cylindrical passageway (19) which is inclined downwardly toward said bottom (10) of said melting chamber (2).

6. A process for retrofitting a furnace useful for melting glass forming ingredients, said furnace comprising a melting chamber (2) having a bottom (10), a roof (11), lateral side walls (12), inlet means (15) and outlet means (13); and at least one air-fuel burner placed on each lateral side wall, said at least one air-fuel burner comprising a first refractory block (9) having a passageway; wherein said furnace at least partly is converted from air-fuel burner firing to oxy-fuel firing using at least one oxygen-fuel auxiliary burner (20) with an associated second refractory block (18), **characterized in** that for retrofitting a cross-fired regenerative furnace in which at least two regenerators (3, 4) communicate with said melting chamber (2) through a plurality of ports (7, 8) and in which said at least one air-fuel burner is placed adjacent to or under said plurality of ports and has a fuel lance placed in the passageway of said first refractory block (9), said fuel lance and said first refractory block (9) are removed from said lateral side walls (12) of said melting chamber (2), a second refractory block (18) having a passageway (19) which is suitable for insertion of at least one oxygen-fuel auxiliary burner (20) is placed therefor, and at least one oxygen-fuel auxiliary burner (20) is inserted within said passageway (19) of said second refractory block (18).

7. The process according to claim 6, wherein said first refractory block (9) has a converging and diverging passageway and said refractory block (18) has a cylindrical passageway (19).

## Patentansprüche

1. Verfahren zum Schmelzen von Rohglas bildenden Bestandteilen in einem querbefeuerten Regenerativofen (1), der mindestens zwei Regeneratoren (3, 4) aufweist, die mit einer mit einem Boden (10), einem Dach (11), Seitenwänden (12), einer Einlaßanordnung (15) und einer Auslaßanordnung (13) versehenen Schmelzkammer (2) über eine Mehrzahl von Durchlässen (7, 8) entlang den lateralen Seitenwänden der Schmelzkammer in Verbindung stehen, bei dem die Rohglas bildenden Bestandteile und die erhaltene Schmelze in der Schmelzkammer (2) erhitzt werden, indem alternierend Flammen von mindestens einem Luft-Brennstoff-Brenner und mindestens einem Sauerstoff-Brennstoff-Hilfsbrenner (20) an jeder lateralen Seitenwand (12) aktiviert werden, wobei der mindestens eine SauerstoffBrennstoff-Hilfsbrenner (20) parallel zu dem mindestens einen Luft-Brennstoff-Brenner angeordnet ist, dadurch gekennzeichnet, daß die Flamme des mindestens einen Sauerstoff-Brennstoff-Hilfsbrenners (20) an der Grenzfläche der nicht geschmolzenen glasbildenden Bestandteile und des geschmolzenen Glases unter Verwendung der gleichen Befeuerungsfolge wie bei dem mindestens einen Luft-Brennstoff-Brenner so aktiviert wird, daß die Flamme von dem mindestens einen Sauerstoff-Brennstoff-Hilfsbrenner (20) auf die Grenzfläche der nicht geschmolzenen glasbildenden Bestandteile und des geschmolzenen Glases gerichtet wird, ohne den von dem mindestens einen Luft-Brennstoff-Brenner emittierten Flammenimpuls zu unterbrechen.

2. Verfahren nach Anspruch 1, bei dem ferner ein feuerfester Block (18), der mit mindestens einem durchgehenden zylindrischen Durchlaß (19) versehen ist, benachbart oder unter der Mehrzahl von Durchlässen (7, 8) vorgesehen wird, um den mindestens einen Sauerstoff-Brennstoff-Hilfsbrenner (20) in dem mindestens einen zylindrischen Durchlaß (19) zurückgesetzt anzuordnen.

3. Verfahren nach Anspruch 1 oder 2, bei dem an jeder lateralen Seitenwand (12) zwei Sauerstoff-Brennstoff-Hilfsbrenner (20) vorgesehen sind.

4. Zum Schmelzen von glasbildenden Bestandteilen geeigneter Ofen (1), der eine Schmelzkammer (2) mit einem Boden (10), einem Dach (11), lateralen Seitenwänden (12), einer Einlaßanordnung (15) und einer Auslaßanordnung (13); min-destens einen Luft-Brennstoff-Brenner mit mindestens einem an jeder lateralen Seitenwand angeordneten ersten feuerfesten Block (9); mindestens einen zweiten feuerfesten Block (18), der mit mindestens einem Sauerstoff-Brennstoff-Hilfsbrenner (20) ausgerüstet werden kann und der parallel zu dem mindestens einen ersten feuerfesten Block (9) angeordnet ist; und mindestens einen in einen Durchlaß (19) des zweiten feuerfesten Blockes (18) eingesetzten Sauerstoff-Brennstoff-Hilfsbrenner (20) aufweist, der mit einem Rohr (24) zum Hindurchleiten von Brennstoff versehen ist, das koaxial in einem zylindrischen Rohr (21) zum HindurchIciten von Sauerstoff sitzt; dadurch gekennzeichnet, daß der Ofen ein querbefeuerter Regenerativofen ist, der mindestens zwei Regeneratoren (3, 4) aufweist, die mit der Schmelzkammer (2) über eine Mehrzahl von Durchlässen (7, 8) entlang den lateralen Seitenwänden (12) der Schmelzkammer in Verbindung stehen; daß der erste feuerfeste Block (9) einen konvergierenden und divergierenden Durchlaß und eine in diesen eingesetzte Brennstofflanze aufweist und benachbart oder unter der Mehrzahl von Durchlässen (7, 8) angeordnet ist; und daß der zweite feuerfeste Block (18) mindestens einen zylindrischen Durchlaß (19) zur Aufnahme des Sauerstoff-Brennstoff-Hilfsbrenners (20) aufweist.

5. Ofen nach Anspruch 4, bei dem der mindestens eine zweite feuerfeste Block (18) mit einem zylindrischen Durchlaß (19) versehen ist, der schräg nach unten in Richtung auf den Boden (10) der Schmelzkammer (2) gerichtet ist.

6. Verfahren zum Nachrüsten eines zum Schmelzen von glasbildenden Bestandteilen geeigneten Ofens, der eine Schmelzkammer (2) mit einem Boden (10), einem Dach (11), lateralen Seitenwänden (12), einer Einlaßanordnung (15) und einer Auslaßanordnung (13) sowie mindestens einen Luft-Brennstoff-Brenner an jeder lateralen Seitenwand aufweist, wobei der mindestens eine Luft-Brennstoff-Brenner mit einem einen Durchlaß aufweisenden ersten feuerfesten Block (9) versehen ist; wobei der Ofen mindestens teilweise von Luft-Brennstoff-Brenner-Befeuerung auf Sauerstoff-Brennstoff-Befeuerung unter Verwendung mindestens eines Sauerstoff-Brennstoff-Hilfsbrenners (20) mit einem zugeordneten zweiten feuerfesten Block (18) umgewandelt wird, dadurch gekennzeichnet, daß zum Nachrüsten eines querbefeuerten Regenerativofens, bei dem mindestens zwei Regeneratoren (3, 4) mit der Schmelzkammer (2) über eine Mehrzahl von Durchlässen (7, 8) in Verbindung stehen und bei dem der mindestens eine Luft-Brennstoff-Brenner benachbart den oder unter den mehreren Durchlässen angeordnet ist und eine in dem Durchlaß des ersten feuerfesten Blockes (9) sitzende Brennstofflanze aufweist, die Brennstofflanze und der erste feuerfeste Block (9) aus den lateralen Seitenwänden (12) der Schmelzkammer (2) herausgenommen werden; statt dessen ein zweiter feuerfester Block (18) mit einem Durchlaß (19) angeordnet wird, der sich für das Einsetzen mindestens eines Sauerstoff-Brennstoff-Hilfsbrenners (20) eignet, und mindestens ein Sauerstoff-Brennstoff-Hilfsbrenner (20) in den Durchlaß (19) des zweiten feuerfesten Blocks (18) eingesetzt wird.

7. Verfahren nach Anspruch 6, bei dem der erste feuerfeste Block (9) mit einem konvergierenden und divergierenden Durchlaß versehen ist und der feuerfeste Block (18) einen zylindrischen Durchlaß (19) aufweist.

## Revendications

1. Procédé pour faire fondre des ingrédients formant du verre brut dans un four (1) à brûleurs transversaux à régénération ayant au moins deux régénérateurs (3, 4) qui communiquent avec une chambre (2) de fusion ayant un fond (10), une voûte (11), des parois (12) latérales, des moyens (15) d'entrée et des moyens (13) de sortie par l'intermédiaire d'un ensemble d'accès (7, 8) le long des parois latérales de la chambre de fusion, comprenant le chauffage des ingrédients formant du verre brut et de la masse fondue qui en résulte dans ladite chambre (2) de fusion par production de flammes en alternance à partir d'au moins un brûleur à air-combustible et d'au moins un brûleur (20) auxiliaire à oxygène-combustible sur chaque paroi (12) latérale, ledit brûleur (20) auxiliaire à oxygène-combustible étant placé parallèlement audit brûleur à air-combustible, caractérisé par la production de la flamme dudit brûleur (20) auxiliaire à oxygène-combustible à l'interface entre les ingrédients non fondus formant le verre et le verre fondu en utilisant la même séquence d'allumage que ledit brûleur à air-combustible, de façon que ladite flamme provenant d'au moins ledit brûleur (20) auxiliaire à oxygène-carburant soit dirigée vers l'interface entre les ingrédients non fondus formant le verre et le verre fondu, sans perturber l'énergie cynétique de la flamme émise par ledit brûleur à air-carburant.

2. Procédé selon la revendication 1, comprenant en outre l'utilisation d'un bloc (18) réfractaire ayant au moins un passage (19) cylindrique le traversant au voisinage ou en dessous dudit ensemble d'accès (7, 8), pour placer au moins ledit brûleur (20) auxiliaire à oxygène-combustible à l'intérieur d'au moins ledit passage (19) cylindrique de façon encastrée.

3. Procédé selon la revendication 1 ou 2, dans lequel deux brûleurs (20) auxiliaires à oxygène-combustible sont prévus sur chaque paroi (12) latérale.

4. Four utilisable pour la fusion d'ingrédients formant du verre, ledit four (1) comprenant une chambre (2) de fusion ayant un fond (10), une voûte (11), des parois (12) latérales, des moyens (15) d'entrée, et des moyens (13) de sortie, au moins un brûleur à air-combustible comprenant au moins un premier bloc (9) réfractaire placé sur chaque paroi latérale; au moins un second bloc (18) réfractaire pouvant être muni d'au moins un brûleur (20) auxiliaire à oxygène-combustible placé parallèlement audit premier bloc (9) réfractaire, et au moins un brûleur (20) auxiliaire à oxygène-combustible comprenant un tube (24) pour le passage de combustible, qui est placé coaxialement à l'intérieur d'une canalisation (21) cylindrique pour le passage d'oxygène insérée dans un passage (19) dudit second bloc (18) réfractaire; caractérisé en ce que ledit four est un four à brûleurs transversaux à régénération comprenant au moins deux régénérateurs (3, 4) qui communiquent avec ladite chambre (2) de fusion par l'intermédiaire d'un ensemble d'accès (7, 8) disposés suivant la longueur des parois latérales (12) de la chambre de fusion, en ce que ledit premier bloc (9) réfractaire présente un passage convergent et divergent et une lance à combustible insérée dans celui-ci et placée au voisinage ou en dessous dudit ensemble d'accès (7, 8); et en ce que ledit second bloc (18) réfractaire a au moins un passage (19) cylindrique pour recevoir ledit brûleur (20) auxiliaire à oxygène-combustible.

5. Four selon la revendication 4, dans lequel ledit second bloc (18) réfractaire a un passage (19) cylindrique qui est incliné vers le bas et vers ledit fond (10) de ladite chambre (2) de fusion.

6. Procédé pour améliorer un four utilisable pour la fusion d'ingrédients formant du verre, ledit four comprenant une chambre (2) de fusion ayant un fond (10), une voûte (11), des parois (12) latérales, des moyens (15) d'entrée, et des moyens (13) de sortie; et au moins un brûleur à air-combustible placé sur chaque paroi latérale, ledit brûleur à air-combustible comprenant un premier bloc (9) réfractaire ayant un passage; dans lequel ledit four est au moins partiellement converti d'un brûlage par brûleurs à air-combustible à un brûlage à oxygène-combustible utilisant au moins un brûleur (20) auxiliaire à oxygène-combustible avec un second bloc (18) réfractaire associé, caractérisé en ce que, pour améliorer un four à brûleurs transversaux à régénération dans lequel au moins deux régénérateurs (3, 4) communiquent avec ladite chambre (2) de fusion par l'intermédiaire d'un ensemble d'accès (7, 8) et dans lequel ledit brûleur à air-combustible est placé au voisinage ou en dessous dudit ensemble d'accès et présente une lance à combustible placée dans le passage dudit premier bloc (9) réfractaire, ladite lance à combustible et ledit premier bloc (9) réfractaire sont écartés desdites parois (12) latérales de ladite chambre (2) de fusion, un second bloc (18) réfractaire ayant un passage (19) qui se prête à l'insertion d'au moins un brûleur (20) auxiliaire à oxygène-combustible est mis en place à cet effet, et au moins un brûleur (20) auxiliaire à oxygène-combustible est inséré dans ledit passage (19) dudit second bloc (18) réfractaire.

7. Procédé selon la revendication 6, dans lequel ledit premier bloc (9) réfractaire a un passage convergent et divergent, et ledit bloc (18) réfractaire a un passage (19) cylindrique.
